# FASCICULE DE BREVET EUROPEEN

(11) **EP 3 647 760 B1**
(45) Date de publication et mention de la délivrance du brevet: **09.11.2022**
(21) Numéro de dépôt: 19206538.1
(22) Date de dépôt: 31.10.2019
(51) Int. Cl.: G01M 17/013

(54) **MACHINE ET PROCEDE DE TEST DE SYSTEME DE FIXATION DE ROUE DE VEHICULE AUTOMOBILE**
MASCHINE UND VERFAHREN ZUM TESTEN DES BEFESTIGUNGSSYSTEMS EINES KRAFTFAHRZEUGRADS
MACHINE AND METHOD FOR TESTING SYSTEM FOR ATTACHING A WHEEL OF A MOTOR VEHICLE

(30) Priorité: 02.11.2018 FR 1871354
(43) Date de publication de la demande: 06.05.2020
(73) Titulaire: Accuride Wheels Troyes SAS, 10600 La Chapelle-Saint-Luc (FR)
(72) Inventeur: REMY, Philippe, 10150 LAVAU (FR); BRIOIS, Arnaud, 10440 TORVILLIERS (FR); DUGRES, Hugues, 10150 PONT STE MARIE (FR)
(74) Mandataire: Fidal Innovation

(56) Documents cités:
- DE-A1-102014 104 158
- DE-B3-102007 044 718
- US-A- 4 475 383
- US-A1- 2010 024 565

## Description

### DOMAINE DE L'INVENTION

La présente invention se rapporte à une machine et à un procédé de test de système de fixation de roue de véhicule automobile.

### ARRIERE-PLAN TECHNOLOGIQUE

Plus précisément, l'invention se rapporte à une machine de test de système de fixation de roue de véhicule automobile.

Les roues d'un véhicule automobile sont un élément essentiel de celui-ci. En effet, c'est par la roue que passent les efforts entre le moteur et le sol, permettant ainsi au véhicule d'avancer. La roue est fixée à un arbre. La bonne fixation de la roue à l'arbre permet de garantir un freinage de bonne qualité, ce qui est essentiel du point de vue de la sécurité routière.

Actuellement, la fixation de la roue sur l'arbre est testée en situation réelle lors de tests de conduites sur route. Au cours de tels tests, un pilote professionnel conduit un véhicule automobile sur lequel est montée la roue, de manière à soumettre la fixation de la roue sur l'arbre à des conditions extrêmes. A l'issue du test de conduite sur route, on observe la fixation de la roue sur l'arbre.

Toutefois, de tels tests de conduite posent problème. D'une part, pour une même roue, il peut exister une grande disparité des résultats de test, selon le pilote et/ou le véhicule (les caractéristiques du véhicule autres que la fixation de la roue à l'arbre). D'autre part, conduire de tels tests est logistiquement complexe, car cela nécessite de rassembler un circuit, un pilote, des équipements de mesure, des conditions météorologiques particulières, ... Le document DE 10 2014 104158A décrit un dispositif de test.

L'invention vise ainsi à réduire le besoin de tests de conduite pour l'évaluation de la fixation roue/arbre.

### RESUME DE L'INVENTION

Ainsi, l'invention se rapporte à une machine de test de système de fixation de roue de véhicule automobile, le système de fixation de roue comprenant une roue, un arbre, et au moins trois vis de fixation fixant la roue à l'arbre, la machine de test comprenant :
- un support adapté pour qu'y soit monté le système de fixation de roue,
- un système d'excitation comprenant un organe de sollicitation solidarisable à la roue, et un moteur adapté pour entrainer l'organe de sollicitation de manière à appliquer une sollicitation alternée à la roue par rapport au support, l'organe de sollicitation comprenant au moins une portion de contact en contact avec la roue, la portion de contact étant extérieure à la roue..

Grâce à ces dispositions, on peut appliquer des sollicitations à la liaison roue/arbre sans avoir recours à des tests de conduite grandeur nature.

Selon différents aspects, il est possible de prévoir l'une et/ou l'autre des dispositions ci-dessous.

Selon une réalisation, la machine comprend en outre un système d'acquisition adapté pour au moins assister à l'estimation d'un paramètre représentatif de la fixation de la roue à l'arbre.

Selon une réalisation, le paramètre représentatif comprend l'un ou l'autre de :
- une rotation axiale d'au moins une vis de fixation par rapport à une position de référence,
- un effort mesuré sur la roue,
- une température mesurée,
- un paramètre composite de deux ou plus des paramètres représentatifs élémentaires ci-dessus.

Selon une réalisation, le système d'excitation est adapté pour appliquer la sollicitation par l'un et/ou l'autre de :
- un déplacement imposé,
- un effort imposé.

Selon une réalisation, le système d'excitation est adapté pour simuler une sollicitation appliquée à la roue lors de la conduite d'un véhicule automobile équipé de la roue.

Selon une réalisation, le système d'excitation est adapté pour simuler des actions répétées de ralentissement et d'accélération du véhicule automobile.

Selon une réalisation, le système d'excitation comprend au moins une portion de contact extérieure à la roue, destinée à être en contact avec une surface externe de la roue.

Selon une réalisation, la sollicitation est appliquée tangentiellement à une surface périphérique de la roue.

Selon une réalisation, la sollicitation est appliquée en un secteur radial de la surface périphérique de la roue.

Selon une réalisation, la sollicitation est appliquée en plusieurs plans orthogonaux à l'axe de la roue et répartis selon l'axe de la roue, ou en un plan unique orthogonal à l'axe de la roue.

Selon une réalisation, la machine comprend en outre un module de chauffage adapté pour chauffer les vis de fixation.

Selon un autre aspect, l'invention se rapporte à un procédé de test de système de fixation de roue de véhicule automobile dans lequel :
- on fournit un système de fixation de roue comprenant une roue, un arbre, et au moins trois vis de fixation fixant la roue à l'arbre,
- on monte l'arbre à un support ,
- un organe de sollicitation d'un système d'excitation est solidarisé à la roue, et un moteur du système d'excitation entraine l'organe de sollicitation pour appliquer une sollicitation alternée à la roue par rapport au support, l'organe de sollicitation comprenant au moins une portion de contact en contact avec la roue, la portion de contact étant extérieure à la roue.

### BREVE DESCRIPTION DES DESSINS

Des modes de réalisation de l'invention seront décrits ci-dessous par référence aux dessins, décrits brièvement ci-dessous :
La fig.1 représente une roue selon un mode de réalisation.
La fig.2 est une vue de dessus qui représente une machine selon un mode de réalisation.
La fig.3 est une vue de côté en coupe représentant la machine de la figure 2 sur laquelle est montée une roue.
La fig.4 est une vue de dessus représentant une vis marquée selon un mode de réalisation.
La fig.5 est une vue schématique de principe d'un système informatisé d'acquisition.
La fig.6 est une vue en coupe partielle d'un exemple de transmission.
La fig.7 est une représentation schématique vue de dessus d'une roue avant test.
La fig.8 est une représentation similaire à celle de la figure 7 après test.

Sur les dessins, des références identiques désignent des objets identiques ou similaires.

### DESCRIPTION DETAILLEE

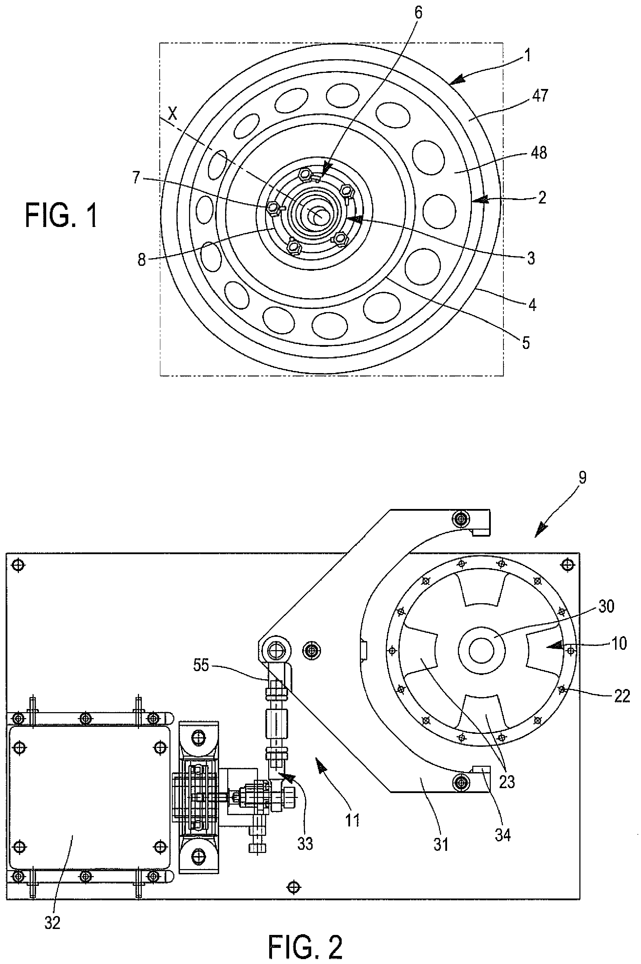

La figure 1 représente une roue 1 selon un mode de réalisation, présentée dans le contexte du montage sur un véhicule. La roue 1 est une roue de véhicule automobile, c'est-à-dire conçue pour répondre aux spécifications requises pour le roulement d'un véhicule automobile. Par véhicule automobile, dans le cadre de l'invention, on désigne principalement des voitures, camionnettes, bus ou camion, du type pesant entre 0,5 et quelques dizaines de tonnes, réparties sur deux à quatre essieux. Ainsi, dans le cadre de l'invention, on ne s'intéresse pas aux roues de vélo ou motocycle, de trains ou d'avion, qui sont fixées par des technologies différentes. En utilisation finale, la roue 1 est équipée d'un pneumatique. Toutefois, la machine de test peut être utilisée pour tester une roue dépourvue de pneumatique, afin que le test ne soit pas dépendant des caractéristiques du pneumatique.

La roue 1 présente une géométrie de révolution autour d'un axe X, qui est l'axe du roulement. Dans la description qui suit, les termes « radialement interne » (ou « central ») et « radialement externe » sont utilisés par référence à l'éloignement à l'axe « X ». Les termes « axialement interne » et « axialement externe » sont utilisés selon la position le long de l'axe « X ». La partie « axialement interne » de la roue est tournée vers le véhicule, alors que la partie « axialement externe » de la roue est tournée vers l'extérieur. La roue 1 comprend un trou central 3 radialement interne adapté pour assembler la roue à un essieu du véhicule automobile, le cas échéant par l'intermédiaire de mécanismes de roulement. La roue 1 comprend également une surface périphérique 4 radialement externe. Entre le trou central 3 et la surface périphérique 4, la roue comprend une portion de corps 5. La portion de corps 5 est structurée pour répondre aux spécifications mécaniques entre le trou central 3, relié à l'essieu, et la surface périphérique 4 sollicitée (par l'intermédiaire du pneumatique) par la route. La portion de corps 5 comprend par un exemple une pièce centrale 48, parfois appelée « disque » (pour la raison qu'elle peut être réalisée à partir d'un disque mis en forme) et une pièce périphérique 47, parfois appelée « jante », liée ensemble, par exemple par emboîtement puis soudure. Elle est par exemple ajourée, comme visible sur la figure 1.

On prévoit un système de fixation 6 pour la fixation de la roue 1 à l'arbre. La roue 1 est fixée à l'arbre par vissage. Dans le domaine automobile, typiquement, la roue 1 est fixée à l'arbre par l'intermédiaire de trois à six vis 7. Dans le présent exemple, on utilise cinq vis. Toutefois, l'invention est applicable à d'autres configurations. Selon un mode de réalisation, les vis utilisées pour le vissage sont identiques les unes aux autres, vissées chacune selon un axe parallèle à l'axe X, et régulièrement réparties le long d'un cercle centré sur l'axe X. Dans le cas présent, le disque 48 comprend une portion radialement centrale 8, proche du trou central 3, parfois appelée « centre-roue », utilisée pour la fixation de la roue 1 à l'arbre. La portion radialement centrale 8 comprend des trous de fixation à travers lesquels sont insérées, chacune, une vis 7. Le vissage est réalisé par exemple à un couple prédéterminé. Le nombre de vis 7 et le couple dépendent de l'application.

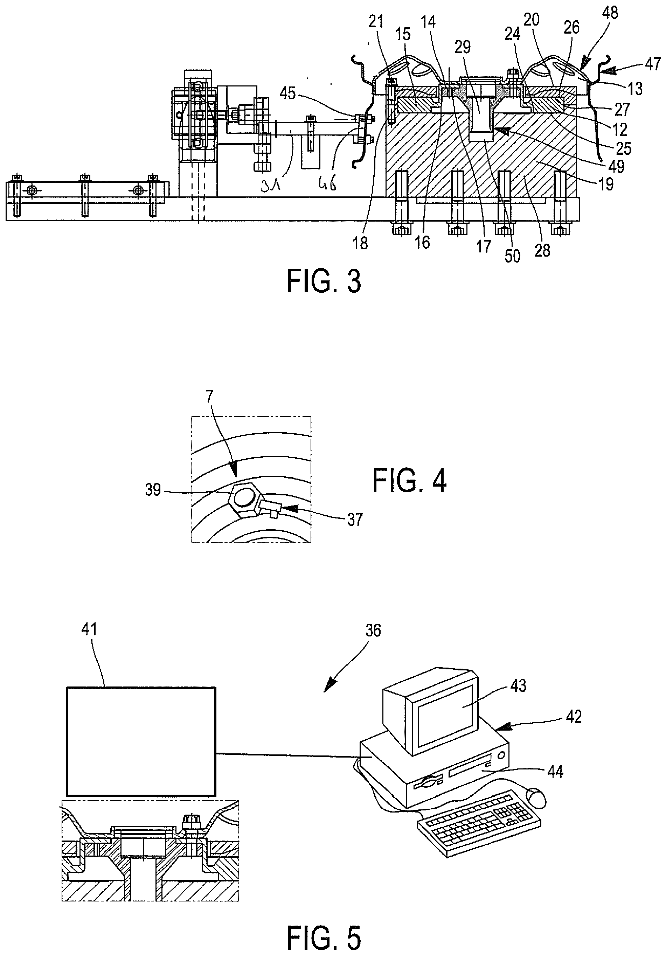

La figure 2 représente schématiquement, en vue de dessus, une machine de test 9, selon un mode de réalisation. La machine de test 9 permet de tester le desserrage du système de fixation de roue. La figure 3 est une vue de côté en coupe, sur laquelle le système à tester 49 est installé dans la machine de test 9. La machine de test 9 est adaptée pour effectuer un test de la fixation de la roue 1. Le système à tester 49 comprend un arbre 29, la roue 1, un disque de freinage 12, et les vis 7 assemblant ensemble les divers composants. Le disque de freinage 12 présente une géométrie de révolution autour de l'axe X. Il est fixé à la face axialement interne 13 de la roue 1. Il comprend une portion radialement interne 14 et une portion radialement externe 15 reliées entre elles par un épaulement 16. Dans le cas présent, la portion radialement externe 15 est axialement interne par rapport à la portion radialement interne 14. Le disque de freinage comprend une portion de fixation 17. Dans le cas présent, la portion de fixation 17 est située au niveau de la portion radialement interne 14. Le disque de freinage 12 comprend également une portion de frottement 18. La portion de frottement 18 est épaisse par rapport à la portion de fixation, et est adaptée, en utilisation montée sur un véhicule, pour coopérer avec des patins de freinage pour le freinage du véhicule. Dans le cas présent, la portion de frottement 18 est située au niveau de la portion radialement externe 15. La portion de fixation 17 est en regard de la portion radialement centrale 8 de la roue. D'autres géométries de disque de freinage sont envisageables. L'arbre 29 s'étend axialement selon l'axe « X » et est centré sur celui-ci. L'arbre 29 comprend une portion de fixation 30. La portion de fixation 30 est, dans l'exemple, radialement externe. La portion de fixation 30 est adaptée pour la fixation de la roue 1 à l'arbre 29. Dans le cas particulier, la roue 1 est fixée à l'arbre 29 (au niveau de la portion de fixation 30 de celui-ci) par l'intermédiaire des vis 7, avec interposition du disque de freinage 12 (notamment la portion de fixation 17 de celui-ci). Plus précisément, la portion de fixation 30 de l'arbre 29 comprend des taraudages correspondants aux vis 7 de fixation.

La fixation de la roue qui est testée correspond donc à la fixation de la roue sur l'arbre 29. Cette fixation se fait au moyen de vis de serrages, et en prenant en compte le montage intermédiaire du disque de freinage.

La machine de test 9 comprend un support 10, adapté à recevoir le système à tester 49. La machine de test 9 comprend également un système d'excitation 11, adapté à solliciter mécaniquement la roue 1. La machine de test 9 est configurée pour appliquer au système à tester 49 des efforts représentatifs de ceux survenant au cours de la conduite. Il s'agit par exemple de transferts de charge survenant lors d'accélérations/décélérations appliquées au véhicule.

Le support 10 est agencé de manière à enserrer la roue 1.

A ce titre, selon l'exemple présenté, le support 10 comprend une portion inférieure 19 et une portion supérieure 20 solidarisée ensemble. Dans l'exemple présenté, les portions inférieure 19 et supérieure 20 sont solidarisées ensemble par des vis 21. Les portions inférieure 19 et supérieure 20 sont solidarisées en semble de manière à enserrer la roue 1. Dans le cas particulier présenté, les portions inférieure 19 et supérieure 20 sont solidarisées ensemble de manière à enserrer le disque de freinage 12, et notamment la portion de frottement 18 du disque de freinage 12. Selon l'exemple présenté, la portion inférieure 19 du support 10 comprend un bloc 28 rigide destiné à être fixé rigidement en place. La portion supérieure 20 comprend une couronne de fixation 22 radialement externe, à travers laquelle s'étendent les vis 21. La portion supérieure 20 comprend également des patins 23, s'étendant radialement en direction du centre à partir de la couronne de fixation 22. Dans l'exemple présenté, on utilise par exemple des patins 23 identiques les uns aux autres, et équirépartis selon la périphérie de la couronne de fixation 22. On utilise par exemple quatre patins 23. Toutefois, d'autres configurations sont possibles.

Ainsi, la surface axialement interne 24 du disque de freinage 12 est en contact avec la surface axialement externe 25 de la portion inférieure 19, et la surface axialement externe 26 du disque de freinage 12 est en contact avec la surface axialement interne 27 de la portion supérieure 20, la force de frottement étant assurée par le serrage des vis 21.

L'arbre 29 est monté avec jeu dans le bloc 28. Notamment, l'arbre 29 est monté libre en rotation par rapport à l'axe (X) dans le bloc 28. Le bloc 28 comprend par exemple un évidement central 50 adapté pour recevoir avec jeu l'arbre 29. L'ajustement permet de retenir l'arbre 29 dans la machine de test en cas de sollicitations extrêmes.

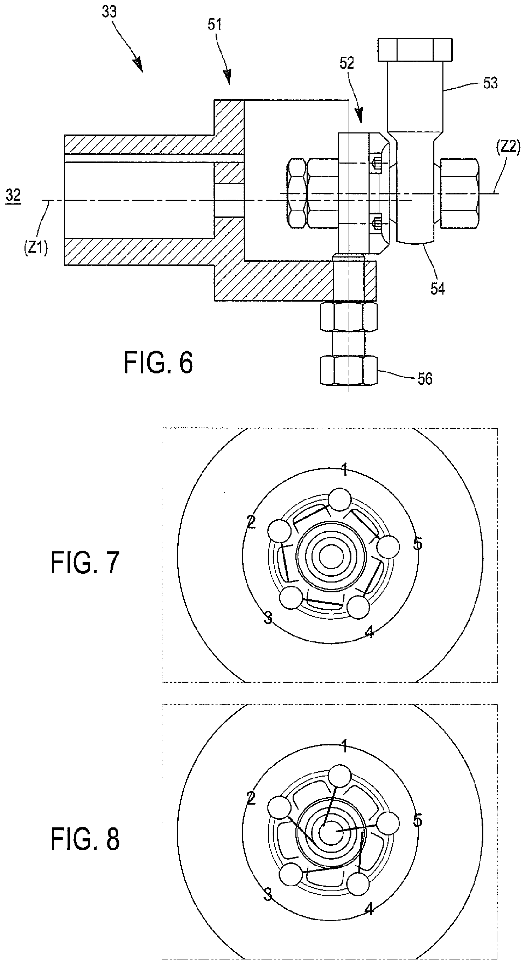

La machine de test 9 comprend également un système d'excitation 11. Celui-ci est prévu pour appliquer une sollicitation alternée à la roue 1 par rapport au support. Pour cela, on prévoit un organe de sollicitation 31, solidarisable à la roue 1. Un moteur 32 est prévu pour entraîner l'organe de sollicitation 31, le cas échéant par l'intermédiaire d'une transmission 33 adaptée. La figure 6 représente schématiquement un exemple de transmission 33, qui met en œuvre un excentrique. Un embout 51 est fixé sur l'arbre de sortie du moteur 32, présentant un axe Z1. Un excentrique 52 est fixé à l'embout 51, et présente un axe Z2 parallèle à l'axe Z1 et décalé par rapport à celui-ci. Au cours de la rotation de l'embout 51 autour de l'axe Z1, l'axe Z2 est donc soumis à une rotation autour de l'axe Z1, dont le rayon est le décalage entre les deux axes. La transmission 33 comprend une bielle 53 dont l'extrémité 54 montée sur l'axe Z2 est donc soumise à une translation circulaire autour de l'axe Z1. La deuxième extrémité 55 de la bielle 53, contrainte dans un plan horizontal, subit des mouvements alternatifs d'avance et de recul selon une direction dans ce plan.

L'organe de sollicitation comprend au moins une portion de contact 34 en contact avec la roue 1. La portion de contact 34 est extérieure à la roue 1, c'est-à-dire qu'elle ne peut être en contact uniquement avec une surface extérieure, radialement et /ou axialement, afin de simuler au mieux les sollicitations de la route. La sollicitation appliquée à la roue comprend un moment autour de l'axe « X » de la roue. La sollicitation peut être appliquée à la roue 1 par l'intermédiaire d'un effort. Dans ce cas, la portion de contact 34 est déplacée, tout en étant en contact avec la roue 1, de manière à solliciter la roue 1. On applique par exemple un effort tangent à la surface périphérique 4 de la roue 1. Dans l'exemple présenté, on dispose par exemple de trois portions de contact 34 appliquant l'effort sur des portions séparées autour de l'axe « X » de la surface périphérique 4. De préférence, les portions de contact 34 sont en contact direct avec la surface périphérique 4 radialement externe de la roue 1. Deux portions de contact 34 sont diamétralement opposées. Une troisième portion de contact 34 est disposée à égale distance des deux premières. Les portions de contact 34 sont par exemple toutes disposées à la même hauteur le long de l'axe « X ». Ainsi, les efforts sont appliqués dans un unique plan perpendiculaire à l'axe « X ». Les portions de contact 34 de l'organe de sollicitation sont donc appliquées en contact avec plusieurs secteurs radiaux 46 correspondants de la surface périphérique 4 de la roue.

Les portions de contact 34 sont soumises à un mouvement de rotation alternatif autour de l'axe « X ». Ce mouvement est transmis aux portions de contact 34 par le moteur 32 via la transmission 33. La sollicitation simule des effets alternatifs de ralentissement et d'accélération, comme on en rencontre lors d'un test de conduite sur piste du véhicule ou dans la vie réelle.

La machine de test 9 comprend en outre un système d'acquisition 36 adapté pour assister à l'estimation d'un paramètre représentatif de la fixation de la roue 1 au support 10.

Selon un premier exemple de réalisation, le système d'acquisition 36 comprend un système de marquage 37 adapté pour marquer une vis 7. Selon un exemple, comme représenté sur la figure 4, le système de marquage 37 comprend un témoin 38 fixé à la tête de vis 39 de la vis 7. Le témoin s'étend par exemple radialement par rapport à l'axe de la vis. En variante, le système de marquage 37 comprend un marqueur permettant de dessiner, peindre, ... une marque sur la tête de vis.

Le système d'acquisition 36 comprend également un dispositif de mesure adapté pour relever les résultats de test. Le résultat de test peut notamment comprendre la rotation axiale de la vis 7 par rapport au support 10, par rapport à sa position initiale, dite position de référence, qui peut être indiqué par la position du témoin 38 à l'issue du test par rapport à sa position au début du test. Le dispositif de mesure est utilisé pour relever ce résultat. Il s'agit par exemple d'un système papier ou informatique dans lequel le résultat de test est saisi, ainsi qu'un certain nombre d'autres informations relatives au test, comme :
- le modèle de roue testé,
- le modèle de disque de frein testé,
- le modèle de vis testé,
- les conditions de serrage de la vis testée,
- l'identifiant de la vis (au cas où il y a plusieurs vis objet du même test),
- le moment où le test est mis en œuvre,
- les caractéristiques de la sollicitation,
- les conditions extérieures (endroit, température ambiante, humidité, personnel en charge du test,...),

Le système d'acquisition permet ainsi de déterminer un paramètre représentatif de la fixation de la roue 1 au support 10. Le paramètre représentatif peut être par exemple :
- la valeur de l'angle maximal de rotation angulaire d'une vis,
- la valeur moyenne de l'angle de rotation angulaire des vis,
- un booléen « 0/1 » selon qu'une loi prédéterminée est vérifiée, par exemple par comparaison des valeurs ci-dessus avec un certain seuil.

En variante ou en complément, un paramètre représentatif peut être caractérisé par les efforts mesurés sur la roue, au moyen d'un système de capteurs d'effort comprenant un ou plusieurs capteurs. On peut par exemple utiliser :
- Un effort maximal mesuré sur la roue,
- Une différence entre l'effort maximal mesuré sur la roue et un effort mesuré un temps prédéterminé après le moment de l'effort maximal,
- Une durée nécessaire pour que l'effort mesuré sur la roue décroisse d'un effort maximal à une fraction prédéterminée de celui-ci,
- un booléen « 0/1 » selon qu'une loi prédéterminée est vérifiée, par exemple par comparaison des valeurs ci-dessus avec un certain seuil.

Un autre paramètre représentatif de la fixation de la roue 1 au support 10 est par exemple lié aux efforts à mettre en œuvre pour le desserrage de la roue à l'issue du test. Par exemple, on mesure le couple nécessaire au desserrage des vis appliqué par un opérateur à l'issue du test (mesure du couple de serrage résiduel).

En variante, le dispositif de mesure comprend un dispositif d'acquisition électronique, comme représenté sur la figure 5. Par exemple, on dispose d'un dispositif de mesure électronique adapté pour détecter et mesurer la rotation de la vis. Par exemple, on utilise une caméra optique 41 adaptée pour acquérir une image de la surface axialement externe de la roue 1, notamment de la portion radialement centrale 8 au début du test, et à la fin du test. La caméra optique 41 est par exemple disposée au-dessus de la roue 1, de manière à ce que la vis 7 soit dans son champ optique. Par exemple, le champ optique de la caméra englobe l'ensemble des vis 7. Les images acquises peuvent être transmises à un système informatisé 42 pour stockage. Le cas échéant, le système informatisé 42 comprend un écran 43 où peuvent être affichées les images acquises. La mesure du résultat de test peut ainsi être faite par un opérateur sur l'écran, et renseignée dans le système informatique 42.

Selon un autre aspect, le système informatique 42 comprend un processeur 44. Le processeur 44 peut exécuter un module informatisé de traitement adapté pour mesurer le paramètre représentatif de la fixation de la roue. Notamment, le module informatisé de traitement comprend un module informatisé de traitement d'image adapté pour comparer les deux images obtenues comme décrit ci-dessus et, par comparaison, déterminer un angle de rotation de la vis (voire de chaque vis).

Le cas échéant, la caméra optique prend plus d'images qu'uniquement une image au début du test et une image à la fin du test. Par exemple, la caméra optique peut prendre une image additionnelle au cours du test. Cette image intermédiaire peut être utilisée, par exemple pour interrompre le test, si d'ores et déjà il est déterminé que la fixation de la roue est impropre. En variante, la caméra optique 41 filme le test à une fréquence d'acquisition donnée. Ainsi, le résultat du test peut comprendre un grand nombre d'images, qui peuvent être exploitées par exemple sous la forme d'une courbe donnant un angle de rotation axiale de la vis au cours du temps.

Le cas échéant, le processeur 44 peut également exécuter un module informatisé de commande qui comprend les instructions de mise en œuvre du test. Le module informatisé de commande est relié au moteur 32, de manière à commander celui-ci selon une séquence de test prédéterminée.

Le système qui vient d'être décrit peut être mis en œuvre comme suit.

On dispose d'un arbre 29. On dispose le disque de freinage 12 sur l'arbre 29.

On fixe la roue 1 à l'arbre 29, avec interposition du disque de freinage 12, par l'intermédiaire des vis 7, serrées selon les conditions de fixation préconisées pour le montage véhicule. On obtient ainsi le système à tester.

On place le système à tester dans la machine de test. L'arbre 29 est introduit dans l'évidement central 50. Le disque de freinage 12 repose le bloc 28.

On assemble la portion supérieure 20 à la portion inférieure 19 au moyen des vis 21, avec interposition du disque de freinage 12.

On déplace l'organe de sollicitation 31 de sorte que les portions de contact 34 soient en contact serré avec la roue 1. Selon un exemple de réalisation, les portions de contact sont fixées à la roue 1 au moyen d'un dispositif de fixation 45. On prévoit par exemple d'opérer par vissage via des trous traversants réalisés dans la roue 1, et plus précisément dans la jante 47. La fixation de la machine de test au système à tester est réalisée de manière à ce que tout éventuel glissement se fasse entre la roue 1 et l'arbre 29.

On conduit le test. Le moteur 32 applique la sollicitation à la roue 1. Selon les exemples de réalisation, on effectue les mesures de la manière appropriée.

Différents exemples de réalisation sont décrits ci-après.

En ce qui concerne la sollicitation appliquée à la roue, il peut s'agir d'un déplacement imposé. Une telle sollicitation est facile à appliquer. En variante, il peut s'agir d'un effort imposé. Cette variante permet de mettre en œuvre un test plus représentatif de situations réelles de conduite.

En ce qui concerne l'application de la sollicitation à la roue, on peut utiliser d'autres dispositions des portions de contact. On peut par exemple utiliser un nombre différent de portions de contact. On peut disposer celles-ci d'une manière différente, par exemple autour de la roue, de manière équi-répartie, ou non. Les portions de contact peuvent être disposées dans un même plan. En variante, on peut disposer des portions de contact dans deux (ou plus) plans parallèles, orthogonaux à l'axe « X ». Les dispositions des portions de contact dans les différents plans peuvent être identiques ou différentes. Les sollicitations appliquées aux portions de contact des différents plans peuvent être identiques ou différentes. Selon les réalisations, on sera plus proche des efforts réellement transmis à la roue, notamment par l'intermédiaire du pneumatique, lors d'essais de conduite.

Les efforts ou déplacements imposés peuvent être uniquement radiaux. En variante, les efforts ou déplacements imposés peuvent de plus comprendre une composante axiale selon un axe parallèle à l'axe « X ». Ces efforts ou déplacements imposés peuvent ainsi également comprendre un moment autour d'un axe orthogonal à l'axe « X ».

La sollicitation peut être appliquée à une fréquence unique, comprise dans la gamme de fréquences allant de 1 Hertz (Hz) à 10 Hz. En variante, la sollicitation peut être appliquée selon plusieurs fréquences comprises dans la gamme de fréquences allant de 1 Hz à 10 Hz .

La machine de test 9 peut également comprendre un module de chauffage adapté pour chauffer les vis de fixation 7. Le module de chauffage est un module additionnel, venant en sus de l'échauffement des vis survenant nécessairement lors du test du fait la friction des différents composants. Le module de chauffage est adapté pour placer les vis de fixation 7 à une certaine température, notamment supérieure à la température ambiante, par exemple de l'ordre de 100°C, voire 130°C. Ce chauffage peut également impliquer un chauffage de l'arbre 29, de la roue 1 et /ou du disque de freinage 12.

Le dispositif de mesure peut comprendre un système de mesure de la température, notamment de la température de chaque vis de fixation 7.

Aussi, un paramètre représentatif du serrage peut inclure une température, comme par exemple une température maximale, minimale, ou moyenne au cours du test, d'une vis de serrage, en particulier, ou en moyenne parmi les vis de serrage, ou un booléen issu de la comparaison de ce paramètre représentatif avec un seuil prédéterminé.

Le cas échéant, le paramètre représentatif du serrage est un paramètre composite comprenant au moins deux paramètres choisis parmi un angle de rotation d'une vis de serrage, un effort mesuré, et/ou une température.

Le cas échéant, la mesure de température permet de réguler le chauffage appliqué au système à tester.

Une même machine de test 9 est adaptée à différents types de roue. Différents types de roue peuvent comprendre un diamètre différent, une hauteur différente, un nombre et une disposition de vis de fixation différents, un disque de freinage différent, un diamètre de trou central différent, ... Dans ce but, on peut prévoir que la machine de test 9 comprend un kit de différentes pièces permettant une adaptation à différents types de roue à tester. On peut par exemple prévoir des portions supérieures 20 de géométries différentes. On peut également prévoir que l'évidement central 50 est réalisé dans une pièce amovible (non représentée) montée serrée dans le bloc 28, et de prévoir plusieurs pièces amovibles comprenant des évidements centraux de dimensions différentes. De même, afin de modifier les sollicitations appliquées, on peut prévoir que le décalage d'axes (Z1)-(Z2) de l'excentrique est modifiable. La figure 6 représente ainsi un système de réglage 56, comme par exemple une vis de réglage, permettant d'adapter la position de l'axe (Z2) par rapport à l'axe (Z1).

Les figures 7 et 8 sont des vues schématiques représentant une roue avant et après un test, selon un exemple. Le test est par exemple conduit pendant une durée prédéterminée. Comme on peut le voir sur les figures, chacune des vis de fixation a tourné autour de son axe au cours du test. L'angle de rotation peut être déterminé par mesure sur les figures, ou par traitement numérique.

### Références :

| | | | | | |
|---|---|---|---|---|---|
| Roue | 1 | portion radialement interne | 14 | surface axialement interne | 24 |
| trou central | 3 | | | | |
| Surface périphérique | 4 | portion radialement externe | 15 | surface axialement externe | 25 |
| Portion de corps | 5 | | | | |
| Système de fixation | 6 | épaulement | 16 | surface axialement externe | 26 |
| Vis | 7 | portion de fixation | 17 | | |
| portion radialement centrale | 8 | portion de frottement | 18 | surface axialement interne | 27 |
| | | portion inférieure | 19 | bloc | 28 |
| machine de test | 9 | portion supérieure | 20 | arbre | 29 |
| support | 10 | vis | 21 | portion de fixation | 30 |
| système d'excitation | 11 | couronne de fixation | 22 | organe de sollicitation | 31 |
| disque de freinage | 12 | patins | 23 | moteur | 32 |
| face axialement interne | 13 | | | | |
| transmission | 33 | | | | |
| portion de contact | 34 | | | | |
| système d'acquisition | 36 | | | | |
| système de marquage | 37 | | | | |
| témoin | 38 | | | | |
| tête de vis | 39 | | | | |
| caméra optique | 41 | | | | |
| système informatisé | 42 | | | | |
| écran | 43 | | | | |
| processeur | 44 | | | | |
| dispositif de fixation | 45 | | | | |
| secteur radial | 46 | | | | |
| pièce périphérique | 47 | | | | |
| pièce centrale | 48 | | | | |
| système à tester | 49 | | | | |
| évidement central | 50 | | | | |
| embout | 51 | | | | |
| excentrique | 52 | | | | |
| bielle | 53 | | | | |
| extrémités | 54, 55 | | | | |
| système de réglage | 56 | | | | |

## Revendications

1. Machine de test (9) de système de fixation de roue de véhicule automobile, le système de fixation de roue comprenant une roue (1), un arbre (29), et au moins trois vis de fixation (7) fixant la roue (1) à l'arbre (29), la machine de test (9) comprenant :
- un support (10) adapté pour qu'y soit monté le système de fixation de roue ,
- un système d'excitation (11) comprenant un organe de sollicitation (31) solidarisable à la roue (1), et un moteur (32) adapté pour entrainer l'organe de sollicitation (31) de manière à appliquer une sollicitation alternée à la roue (1) par rapport au support (10),
l'organe de sollicitation comprenant au moins une portion (34) de contact en contact avec la roue, la portion (34) de contact étant extérieure à la roue (1).

2. Machine selon la revendication 1, comprenant en outre un système d'acquisition (36) qui comprend un dispositif de mesure adapté pour relever les résultats du test, le système d'acquisition étant ainsi adapté pour déterminer un paramètre représentatif de la fixation de la roue (1) à l'arbre (29).

3. Machine selon la revendication 1 ou la revendication 2, dans laquelle l'organe de sollicitation (31) comprend au moins une portion de contact (34) destinée à être en contact avec la roue (1), la sollicitation comprenant le déplacement de la portion de contact (34).

4. Machine selon la revendication 3, dans laquelle la au moins une portion de contact (34) est extérieure à la roue (1), étant destinée à être en contact avec une surface extérieure de la roue (1).

5. Machine selon la revendication 3 ou la revendication 4, dans laquelle l'arbre (29) s'étend axialement selon un axe (X), et dans laquelle la portion de contact (34) est disposée autour dudit axe (X) lorsque le système de fixation de fixation de roue est monté sur le support (10), de manière à appliquer un effort tangent à une surface périphérique (4) de la roue.

6. Machine selon la revendication 5, comprenant une transmission (33) entre le moteur (32) et la portion de contact (34), de manière à soumettre la portion de contact (34) à un mouvement de rotation alternatif autour dudit axe (X).

7. Machine selon la revendication 5 ou la revendication 6, dans laquelle l'organe de sollicitation (31) comprend plusieurs portions de contact (34) disposées dans deux ou plus plans parallèles, orthogonaux audit axe (X).

8. Machine selon l'une des revendications 1 à 7, comprenant en outre un module de chauffage adapté pour chauffer les vis de fixation (7).

9. Procédé de test de système de fixation de roue de véhicule automobile dans lequel
- on fournit un système de fixation de roue comprenant une roue (1), un arbre (29), et au moins trois vis de fixation (7) fixant la roue (1) à l'arbre (29),
- on monte le système de fixation de roue sur un support (10),
- un organe de sollicitation(31) d'un système d'excitation (11) est solidarisé à la roue (1), et un moteur (32) du système d'excitation (11) entraine l'organe de sollicitation (31) pour appliquer une sollicitation alternée à la roue (1) par rapport au support (10)
l'organe de sollicitation comprenant au moins une portion (34) de contact en contact avec la roue, la portion (34) de contact étant extérieure à la roue (1).

10. Procédé de test selon la revendication précédente, dans lequel on fournit un système d'acquisition qui détermine un paramètre représentatif de la fixation de la roue (1) à l'arbre (29).

11. Procédé de test selon la revendication 10, dans lequel le paramètre représentatif comprend l'un parmi :
- une rotation axiale d'au moins une vis de fixation (7) par rapport à une position de référence,
- un effort mesuré sur la roue (1),
- une température mesurée,
- un paramètre composite de deux ou plus des paramètres représentatifs élémentaires ci-dessus.

12. Procédé de test selon l'une quelconque des revendications 9 à 11, dans lequel la sollicitation alternée comprend :
- un déplacement imposé, et/ou
- un effort imposé.

13. Procédé de test selon l'une quelconque des revendications 9 à 12, dans lequel l'organe de sollicitation (31) comprend au moins une portion (34) de contact, et dans lequel la au moins une portion de contact (34) est mise en contact avec une surface extérieure de la roue (1).

14. Procédé de test selon l'une quelconque des revendications 9 à 13, dans lequel le système d'excitation (11) est adapté pour simuler une sollicitation appliquée à la roue (1) lors de la conduite d'un véhicule automobile équipé de la roue (1).

15. Machine selon l'une des revendications 9 à 14, dans lequel le système d'excitation (11) est adapté pour simuler des actions répétées de ralentissement et d'accélération du véhicule automobile.

## Patentansprüche

1. Testmaschine (9) für ein Radbefestigungssystem eines Kraftfahrzeugs, wobei das Radbefestigungssystem ein Rad (1), eine Welle (29) und mindestens drei Befestigungsschrauben (7) umfasst, die das Rad (1) an der Welle (29) befestigen und die Testmaschine (9) Folgendes umfasst:
- einen Träger (10), der geeignet ist, das Radbefestigungssystems darauf zu montieren,
- ein Erregungssystem (11), bestehend aus einem Beanspruchungselement (31), das fest mit dem Rad (1) verbunden werden kann, und einem Motor (32), der geeignet ist, das Beanspruchungselement (31) so anzutreiben, dass eine Wechselbeanspruchung auf das Rad (1) in Bezug auf den Träger (10) ausgeübt wird,
das Beanspruchungselement, bestehend aus mindestens einem Kontaktabschnitt (34), der mit dem Rad in Berührung ist, wobei der Kontaktabschnitt (34) außerhalb des Rads (1) liegt.

2. Maschine nach Anspruch 1, ferner bestehend aus einem Erfassungssystem (36), das eine Messvorrichtung umfasst, die geeignet ist, die Ergebnisse des Tests zu erfassen, sodass das Erfassungssystem geeignet ist, einen Parameter zu bestimmen, der für die Befestigung des Rads (1) an der Welle (29) repräsentativ ist.

3. Maschine nach Anspruch 1 oder 2, bei der das Beanspruchungselement (31) mindestens einen Kontaktabschnitt (34) umfasst, der dazu bestimmt ist, mit dem Rad (1) in Berührung zu sein, und die Beanspruchung die Bewegung des Kontaktabschnitts (34) umfasst.

4. Maschine nach Anspruch 3, bei der mindestens ein Kontaktabschnitt (34) außerhalb des Rads (1) liegt und dazu bestimmt ist, mit einer Außenfläche des Rads (1) in Berührung zu sein.

5. Maschine nach Anspruch 3 oder 4, bei der sich die Welle (29) axial entlang einer Achse (X) erstreckt und bei der der Kontaktabschnitt (34) um die genannte Achse (X) herum angeordnet ist, wenn das Radbefestigungssystem so auf dem Träger (10) montiert ist, dass eine Tangentialkraft auf eine Umfangsfläche (4) des Rads ausgeübt wird.

6. Maschine nach Anspruch 5, bestehend aus einem Getriebe (33) zwischen dem Motor (32) und dem Kontaktabschnitt (34), sodass der Kontaktabschnitt (34) einer abwechselnden Drehbewegung um die Achse (X) ausgesetzt wird.

7. Maschine nach Anspruch 5 oder 6, bei der das Beanspruchungselement (31) mehrere Kontaktabschnitte (34) umfasst, die in zwei oder mehr parallelen Ebenen angeordnet sind, die rechtwinklig zur genannten Achse (X) verlaufen.

8. Maschine nach einem der Ansprüche 1 bis 7, ferner bestehend aus einem Heizmodul, das geeignet ist, die Befestigungsschrauben (7) zu erhitzen.

9. Testverfahren für ein Radbefestigungssystem eines Kraftfahrzeugs, bei dem:
- ein Radbefestigungssystem bereitgestellt wird, das ein Rad (1), eine Welle (29) und mindestens drei Befestigungsschrauben (7) zur Befestigung des Rads (1) an der Welle (29) umfasst,
- das Radbefestigungssystem auf einem Träger (10) montiert wird,
- ein Beanspruchungselement (31) eines Erregungssystems (11) fest mit dem Rad (1) verbunden ist, und ein Motor (32) des Erregungssystems (11) das Beanspruchungselement (31) antreibt, um eine Wechselbeanspruchung auf das Rad (1) in Bezug auf den Träger (10) auszuüben
das Beanspruchungselement, bestehend aus mindestens einem Kontaktabschnitt (34), der mit dem Rad in Berührung ist, wobei der Kontaktabschnitt (34) außerhalb des Rads (1) liegt.

10. Testverfahren nach dem vorhergehenden Anspruch, bei dem ein Erfassungssystem bereitgestellt wird, das einen Parameter bestimmt, der für die Befestigung des Rads (1) an der Welle (29) repräsentativ ist.

11. Testverfahren nach Anspruch 10, bei dem der repräsentative Parameter einen der folgenden Parameter umfasst:
- eine axiale Drehung von mindestens einer Befestigungsschraube (7) in Bezug auf eine Referenzposition,
- eine gemessene Kraft auf das Rad (1),
- eine gemessene Temperatur,
- einen zusammengesetzten Paramater aus zwei oder mehr der oben genannten elementaren repräsentativen Parameter.

12. Testverfahren nach einem beliebigen der Ansprüche 9 bis 11, bei dem die Wechselbeanspruchung Folgendes umfasst:
- eine aufgebrachte Bewegung und/oder
- eine aufgebrachte Kraft.

13. Testverfahren nach einem der Ansprüche 9 bis 12, bei dem das Beanspruchungselement (31) mindestens einen Kontaktabschnitt (34) aufweist, und bei dem mindestens ein Kontaktabschnitt (34) mit einer Außenfläche des Rads (1) in Berührung gebracht wird.

14. Testverfahren nach einem der Ansprüche 9 bis 13, bei dem das Erregungssystem (11) geeignet ist, eine Beanspruchung zu simulieren, die beim Fahren eines mit dem Rad (1) ausgestatteten Kraftfahrzeugs auf das Rad (1) ausgeübt wird.

15. Maschine nach einem der Ansprüche 9 bis 14, bei der das Erregungssystem (11) geeignet ist, ein wiederholtes Bremsen und Beschleunigen des Kraftfahrzeugs zu simulieren.

## Claims

1. Machine (9) for testing automobile vehicle wheel fixing system, whereby the wheel fixing system comprises a wheel (1), a shaft (29), and at least three fixing screws (7) attaching the wheel (1) to the shaft (29), and whereby the test machine (9) comprises:
- a bracket (10) suitable for the wheel fixing system to be mounted thereon,
- an excitation system (11) comprising a loading organ (31) that can be secured to the wheel (1), and an engine (32) suitable for setting in motion the loading organ (31) so as to apply alternated loading to the wheel (1) with regard to the bracket (10),
the loading organ comprises at least one contact portion (34) in contact with the wheel, with the contact portion (34) being outside the wheel (1).

2. Machine according to claim 1, also comprising an acquisition system (36) which includes a measuring device suitable for identifying test results, with the acquisition system also being suitable for determining a parameter representative of the wheel (1) fixation to the shaft (29).

3. Machine according to claim 1 or claim 2, wherein the loading organ (31) comprises at least one contact portion (34) intended to be in contact with the wheel (1), with the loading including movement of the contact portion (34).

4. Machine according to claim 3 wherein at least one contact portion (34) is outside the wheel (1), it being intended to be in contact with an outside surface of the wheel (1).

5. Machine according to claim 3 or claim 4, wherein the shaft (29) extends axially along an axis (X), and in which the contact portion (34) is placed around said axis (X) when the wheel fixing system is mounted on the bracket (10) so that an effort tangent to a peripheral surface (4) of the wheel can be applied.

6. Machine according to claim 5, comprising a transmission (33) between the engine (32) and the contact portion (34), so as to subject the contact portion (34) to an alternative rotation movement around said axis (X).

7. Machine according to claim 5 or claim 6, wherein the loading organ (31) comprises several contact portions (34) placed around two or more parallel planes, orthogonal to said axis (X).

8. Machine according to one of the claims 1 to 7, also comprising a heating module suitable for heating the fixing screws (7).

9. Method for testing an automobile vehicle wheel fixing wherein:
- a wheel fixing system, comprising a wheel (1), a shaft (29), and at least three fixing screws (7) for fixing the wheel (1) to the shaft (29), is provided,
- the wheel fixing system is mounted on a bracket (10),
- a loading organ (31) of an excitation system (11) is secured to the wheel (1), and an engine (32) of the excitation system (11) sets in motion the loading organ (31) so as to apply alternated loading to the wheel (1) with regard to the bracket (10)
the loading organ comprises at least one contact portion (34) in contact with the wheel, with the contact portion (34) being outside the wheel (1).

10. Method according to the previous claim, wherein an acquisition system is provided which determines a parameter representative of the fixation of the wheel (1) to the shaft (29).

11. Method according to claim 10, wherein the representative parameter includes one of the following:
- an axial rotation of at least one fixing screw (7) with regard to a reference position,
- a measurement effort on the wheel (1),
- a measured temperature,
- a composite parameter of two or more of the elementary representative parameters above.

12. Method according to one of the claims 9 to 11, wherein the alternated loading comprises:
- an imposed movement, and/or
- an imposed effort.

13. Method according to one of the claims 9 to 12, wherein the loading organ (31) comprises at least one contact portion (34), and in which at least one contact portion (34) is placed in contact with a surface outside the wheel (1).

14. Method according to one of the claims 9 to 13 wherein the excitation system (11) is adapted to simulate an applied loading to the wheel (1) when an automobile vehicle equipped with the wheel (1) is driven.

15. Machine according to one of the claims 9 to 14, wherein the excitation system (11) is adapted to simulate repeated automobile vehicle deceleration and acceleration actions.
